# EUROPEAN PATENT APPLICATION

(11) **EP 4 808 052 A1**
(43) Date of publication of application: **16.09.2026**
(21) Application number: 25162613.1
(22) Date of filing: 10.03.2025
(51) Int. Cl.: H04L 12/46, H04L 9/40

(54) **A TELECOMMUNICATIONS METHOD**

(71) Applicant: Network Guard Pte. Ltd., 188778 Singapore (SG)
(72) Inventor: MEMBREY, Peter Loi, Hong Kong (HK)
(74) Representative: Noble, Nicholas

(57) **Abstract**

This disclosure relates to a telecommunications method comprising concurrently maintaining different first and second Virtual Private Network, VPN, communications links between a VPN client and a VPN server.

## Description

### TECHNICAL FIELD

This disclosure relates to a telecommunications method. More particularly, it relates to a method, apparatus and computer readable medium for concurrently maintaining Virtual Private Network, VPN, connections between a VPN client and one or more of a first and second VPN server.

### BACKGROUND

VPNs enable the establishment of secure and encrypted connections over unsecured networks - such as the internet. They connect a client or user device, such as a user's phone to a VPN server in a peer-to-peer manner in order to provide increased security when compared to the use of unencrypted connections.

One or more aspects of the invention are set out in the claims.

### BRIEF DESCRIPTION OF THE DRAWINGS

The disclosure will now be described in more detail in connection with a number of exemplary embodiments shown in the accompanying drawings, in which:
Fig. 1 shows a pair of VPN links between a VPN client and a VPN server;
Fig. 2 shows a pair of VPN links between a VPN client and respective first and second VPN servers;
Fig. 3 shows a VPN client: linked to a first VPN server via respective first and second VPN links and linked to a second VPN server via a third VPN link;
Fig. 4 shows a computing device for implementing the operations described herein;
Fig. 5 shows a first method performed in accordance with the disclosure; and
Fig. 6 shows a second method performed in accordance with the disclosure.

### DETAILED DESCRIPTION

In overview, the disclosure relates to telecommunications methods comprising concurrently maintaining different first and second Virtual Private Network, VPN, communications links between a VPN client and one or more VPN servers. Evaluation of the qualities of the respective VPN communications links may enable a link to be chosen for preferential communication between the VPN client and the one or more VPN servers. By optionally performing passive evaluation, the method neither burdens the network in performing the evaluation nor influences the quality determination. Dynamic switching between VPN communications links beneficially enables the most suitable link at a given time point to be used. As well as relating to a method, the disclosure also relates to apparatus and a computer readable medium for performing the method. All of this will be discussed below in detail.

When a VPN instance is created, it may involve a peer-to-peer connection, for example a VPN client on a user device (such as a user's phone) may connect to a VPN server. There may be multiple ways that the user device could connect with the VPN server - for example by using any one or more of: a cellular protocol, a WiFi protocol, TCP (Transmission Control Protocol), UDP (User Datagram Protocol), IPv4 (Internet Protocol version 4), IPv6 (Internet Protocol version 6) and the user device may be able to connect with the VPN server via different routes across one or more networks. As one example, a given VPN instance may be arranged to attempt to connect a VPN client device to a VPN server using TCP on a named port. As another possibility, a plurality of potential connections may be evaluated before a deemed 'most suitable' potential connection is decided upon and used as a VPN communications link. Once the connection is made, the VPN instance continues to use that VPN communications link for VPN communications.

However, a default VPN communications link or one that has been determined most suitable at the time of creation of a VPN instance may not be the most suitable either at creation or at a subsequent time point as network circumstances can change. For example, if a UDP VPN communications link is chosen by default, it could be that a TCP connection instead would provide better performance and similarly IPv6 may provide better performance over IPv4. Furthermore, if a TCP connection was chosen and the user device changed network, the TCP connection would go down whereas a UDP connection would not have. Similarly, the performance (link quality) of a given VPN communications link may change with time; for example a surge in third party TCP communications through a network that a TCP VPN communications link could cause a sudden slow down/reduction in performance/link quality for that TCP VPN communications link.

As one possibility, instead of creating a VPN instance by selecting (or defaulting to) one VPN communications link type and sticking to it, a VPN instance may be created which concurrently maintains different first and second Virtual Private Network, VPN, communications links between a VPN client and a VPN server. This allows the VPN to dynamically change which VPN communication link is used over time. As one example, dynamic changes may be effected based on performance/link quality requirements of the VPN client and/or VPN server. Additionally or alternatively such changes may be effected based on performance/link quality requirements of the data being conveyed - such as a maximum lag requirement for streamed video or gaming data.

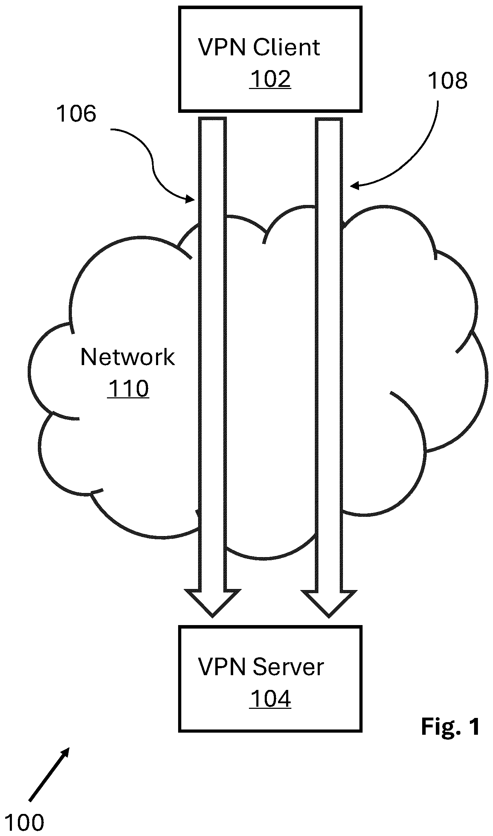

Figure 1 shows a VPN client 102 in communication with a VPN server 104 via two different and concurrently maintained VPN communications links 106, 108 across a network 110. Preferably, when the VPN 100 of Figure 1 is instantiated, its VPN communications links 106, 108 are simultaneously setup. As another possibility, they may be set up sequentially or the setups may temporally overlap. Although the example of Figure 1 is explained by reference to first and second VPN communications links 106, 108 between the VPN client 102 and the VPN server 104, any number of different VPN communications links may equally be concurrently maintained, have their link quality assessed and chosen between in order to determine and consequently use a preferential VPN communications link.

With two different VPN communications links 106, 108 being concurrently maintained, a choice may be made to preferentially communicate using one of the first and second VPN communication links 106, 108. For example, it may be determined that all payload data is to be transmitted between the VPN client 102 and the VPN server 104 using the first VPN communications link. As another possibility, it may be determined to send all data of a specific type via the second VPN communications link. The decision as to which VPN communications link to use is based on evaluations of the performance characteristics (quality/health) of the VPN communications links and may be further based on performance requirements for the data to be conveyed - such as packet throughput, bytes transmitted, speed, jitter and/or packet loss.

The performance characteristics of a given VPN communications link may be determined actively, for example by probing the link, but the insertion of data into a VPN communications link can introduce an observation influence on that link's performance and it also increases network traffic/load. Accordingly, it can be preferable to determine the quality of the first and second VPN communications links 106, 108 using passive metrics.

Examples of passive metrics that can be employed to determine a quality (health) measurement of a VPN communications link for any of the methods described herein include:
- bytes transmitted;
- number of packets sent;
- round trip time - measured, for example, by observing the sending out of a TCP packet and the receipt of a corresponding ack;
- jitter - measured, for example, by looking at a variance of round trip times;
- packet loss - measured, for example, by observing the number of retransmits.

Beneficially, the use of such passive metrics enables a real time determination of the quality (health) of a VPN communications link to be made without interfering with the link. Furthermore, such metrics can beneficially be evaluated based on packet headers thus avoiding the need to look at payload content.

As one possibility, data traffic may be pushed down both the first and second VPN communications links and based on the performance of that traffic - for example as evaluated using the above metrics - a determination is made as to which of the VPN communications links 106, 108 to preferentially use for sending future communications.

As one approach, as part of the process of instantiating the VPN, and once the different first and second Virtual Private Network, VPN, communications links 106, 108 have are being maintained between the VPN client 102 and the VPN server 104, both: a first VPN communications link quality measurement based on communication using the first VPN communications link 106 is determined, and a second VPN communications link quality measurement based on communication using the second VPN communications link 108 is determined. The first and second VPN communications link quality measurements are then compared to determine a preferential VPN communications link of the first and second VPN communication links 106, 108 and the preferential VPN communications link is consequently used to preferentially communicate between the VPN client 102 and the VPN server 104.

Preferential communication may mean that all payload data is sent via the preferential VPN communications link, but may instead mean that a subset of payload data is sent via the preferential VPN communications link - for example data of a certain type (such a streaming or gaming data) and/or data determined to be of high importance. As a further example one VPN communications link may be determined to be preferential on the grounds that its characteristics are better for moving DNS traffic as it may have lower latency but perhaps poor overall bandwidth whereas another (or the other) VPN communications link) may be determined to be preferential on the grounds that it is better for streaming as it may have higher latency but greater and/or cheaper bandwidth. The selection of a preferential VPN communications link may not mean that the preferential VPN communications link is the absolute best link to use for the given type of data that is to be conveyed over it, but may instead mean that the overall usage of the available VPN communications links is optimised.

Additionally or alternatively to determining and consequently using a preferential VPN communications link either at or shortly after instantiation of the VPN network, the determination and consequent use of a preferential VPN communications link may also occur subsequently/in a manner that allows dynamic adaption of the VPN network's activities based on a changing quality of one or more of the first and second VPN communication links.

As one possibility, a third VPN communications link quality measurement is determined based on communication using the first VPN communications link 106 and a fourth VPN communications link quality measurement is based on communication using the second VPN communications link 108. A comparison between the third and fourth VPN communications link quality measurements is performed to determine a second preferential VPN communications link of the first and second VPN communication links and the second preferential VPN communications link is consequently used to preferentially communicate between the VPN client and the VPN server.

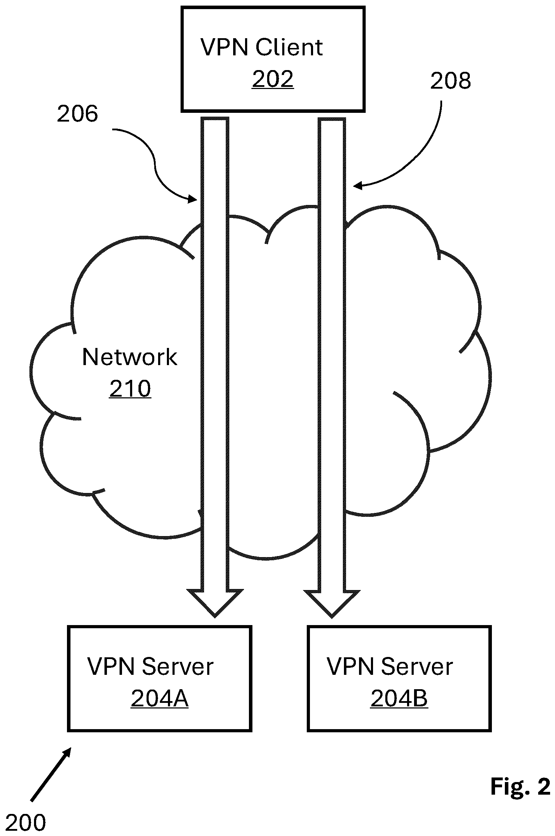

Figure 2 shows a VPN client 202 in communication with a first VPN server 204A and a second VPN server 204B via respective concurrently maintained VPN communications links 206, 208 across a network 210. Preferably, when the VPN 200 of Figure 2 is instantiated, its VPN communications links 206, 208 are simultaneously setup. As another possibility, they may be set up sequentially or the setups may temporally overlap. Although the example of Figure 2 is explained by reference to first and second VPN communications links 206, 208 between the VPN client 202 and respective first and second VPN servers 204A, 204B any number of different VPN communications links may equally be concurrently maintained with respective VPN servers, have their link quality assessed and chosen between in order to determine and consequently use a preferential VPN communications link.

Preferably, one of the first and second VPN servers 204A, 204B is arranged to mirror the other of the first and second VPN servers so that the VPN client is able to interchangeably interact with either VPN server. Beneficially, this enables the VPN client 202 to benefit from accessing whichever of the VPN servers 204A, 204B the VPN client is best linked to - as determined by the VPN communications link quality measurements of the respective servers 204A, 204B. For example, one of the VPN servers may be connected to the VPN client in a manner that enables very high communications speeds and tis approach may enable that to be determined passively and then beneficially taken advantage of.

As one approach, as part of the process of instantiating the VPN, and once the different first and second Virtual Private Network, VPN, communications links 206, 208 have are being maintained between the VPN client 202 and the VPN servers 204A, 204B, both: a first VPN communications link quality measurement based on communication using the first VPN communications link 206 is determined, and a second VPN communications link quality measurement based on communication using the second VPN communications link 208 is determined. The first and second VPN communications link quality measurements are then compared to determine a preferential VPN communications link of the first and second VPN communication links 206, 208 and the preferential VPN communications link is consequently used to preferentially communicate between the VPN client 202 and the respective VPN server 204A, 204B.

Additionally or alternatively to determining and consequently using a preferential VPN communications link either at or shortly after instantiation of the VPN network, the determination and consequent use of a preferential VPN communications link may also occur subsequently/in a manner that allows dynamic adaption of the VPN network's activities based on a changing quality of one or more of the first and second VPN communication links.

As one possibility, a third VPN communications link quality measurement is determined based on communication using the first VPN communications link 206 and a fourth VPN communications link quality measurement is based on communication using the second VPN communications link 208. A comparison between the third and fourth VPN communications link quality measurements is performed to determine a second preferential VPN communications link of the first and second VPN communication links and the second preferential VPN communications link is consequently used to preferentially communicate between the VPN client 202 and the respective VPN server 204A, 204B.

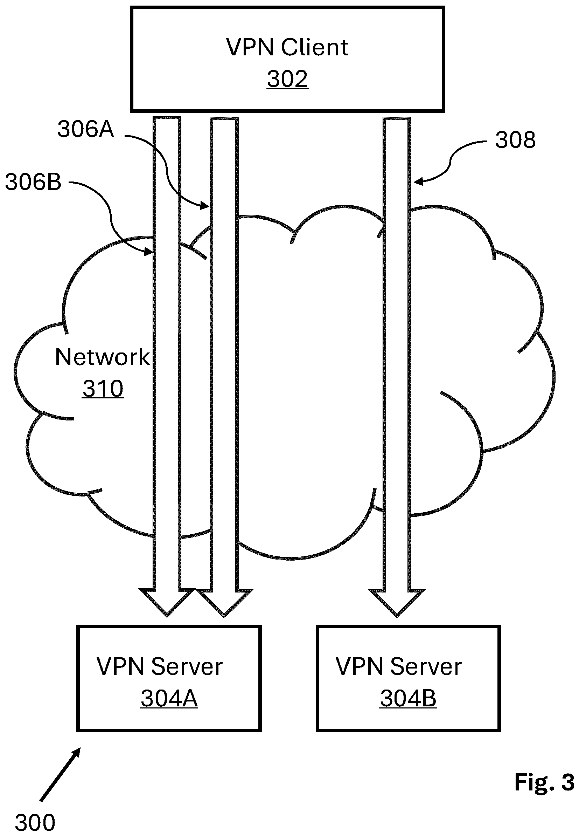

As shown in figure 3, the approaches of figures 1 and 2 may be combined so that a VPN client 302 is in communication with a first VPN server 304A via two concurrently maintained VPN communications links 306A, 306B across a network 310 whilst also being in communication with a second VPN server 304b via a concurrently VPN communications link 308. Preferably, one of the first and second VPN servers 304A, 304B is arranged to mirror the other of the first and second VPN servers so that the VPN client is able to interchangeably interact with either VPN server 304A, 304B. Beneficially, this provides the VPN client 302 with the 'best of both worlds' of the benefits of the approaches of figures 1 and 2.

In the approach of figure 3: a first VPN communications link quality measurement is determined based on communication using a first VPN communications link 306A; a second VPN communications link quality measurement is determined based on communication using a second VPN communications link 306B; and a third VPN communications link quality measurement is determined based on communication using a third VPN communications link 308 before the first, second, and third VPN communications link quality measurements are compared to determine a preferential VPN communications link of the first, second, and third VPN communication links. Consequently, the preferential VPN communications link is used to preferentially communicate between the VPN client and the preferred VPN communications link's respective VPN server 304A, 34B.

Although the example of Figure 3 is explained by reference to first and second VPN communications links 306A, 306B between the VPN client 302 and the first VPN server 304A and a third VPN communications link 308 between the VPN client 302 and the second VPN server 304B, as with the examples of figures 1 and 2, any number of VPN communications links may equally be concurrently maintained between the VPN client 302 and each of any number of respective VPN servers 304A ... 304n.

Examples of how the first and second VPN communications links (and any subsequently-numerated VPN communications links) may be different include the first VPN communications link being arranged for communication using one of IPv4 and IPv6 and the second VPN communications link being arranged for communication using the other one of IPv4 and IPv6. Further examples of how the first and second VPN communications links may be different include the first VPN communications link being arranged for communication using one of UDP and TCP, and the second VPN communications link being arranged for communication using the other one of UDP and TCP. Yet further examples of how the first and second VPN communications links may be different include the first and second VPN communications links each being a respectively different on of: a cellular communications link, a WiFi communications link, a satellite communications link, a Bluetooth communications link, a wired communications link, an optical communications link. A skilled person will recognise that any combination of the above-listed features maybe employed in order to make the first and second VPN communications links different.

As one possibility, and as an alternative in any of the above methods to performing a comparison of VPN link qualities in order to determine which VPN communications link to communicate via, determinations of first and second expected performances of the respective first and second VPN communications links may be made and, based on those determinations, one of the first and second VPN communications links may be preferentially used for communication between the VPN client and the (respective) VPN server. As one possibility, the first and second expected performances may be based on a type of data to be preferentially communicated via the one of the first and second VPN communications links.

The methods described herein may be performed by a pluggable engine and may be implemented/carried out at either or both of the VPN client and VPN server(s). Beneficially, this can enable the engine to be replaced during run time - thereby facilitating upgrade - and also allows the approach by with link preference is determined to be changed during run time. As one possibility, a complex, but maybe less robust approach may be used during normal operation and a more basic, but more robust (failsafe) approach could be switched in to replace the complex approach in situations where performance parameters start approaching the edge of their acceptable values or if an error occurs or the complex approach is not able to handle the situation. Additionally or alternatively, the engine may be replaced based on a time of day - for example so as to go from a 'business mode' during the working day to a 'relaxing mode' during the evening.

Additionally or alternatively, one or both of the VPN client and/or the VPN server(s) may be provisioned with rules for facilitating preferred VPN link determination. For example, they may be instructed to look at what a packet flow looks like in order to determine, for example, whether it looks like a gaming app or another type of data stream and to determine the preferred VPN communications link based on a knowledge of what type of link will be best suited to that type of packet flow. Additionally or alternatively, information about a system or actual cost and or a degree of security may be taken into account when determining the preferred VPN communications link. Likewise, knowledge about an Internet Service Provider (ISP) being used to supply a link and may be used in order to determine the preferred VPN communications link - as one example, a cellular phone provide may throttle UDP communications and accelerate TCP communications and so when a user who is connected via TCP over their cell phone returns home and is able to connect via their landline ISP, it may be suitable to change VPN communications link to UDP.

The above approaches of repeatedly looking at the link quality of multiple VPN communications links before determining a preferential VPN communications link can be repeated in an ongoing manner so as to enable dynamic VPN link selection in a real-time. As it is preferable to avoid constantly switching VPN communications links, a degree of 'stickiness' may be built in - for example by incorporating a minimum time period between which successive VPN link quality measurements are performed on each VPN communications link and/or incorporating a minimum amount of required improvement in the link quality before a change in the preferred VPN communications link is made.

In addition to the above processes, new VPN communications links may be brought up and have their quality measured in order to continually offer the possibility of finding new VPN communications to preferentially use.

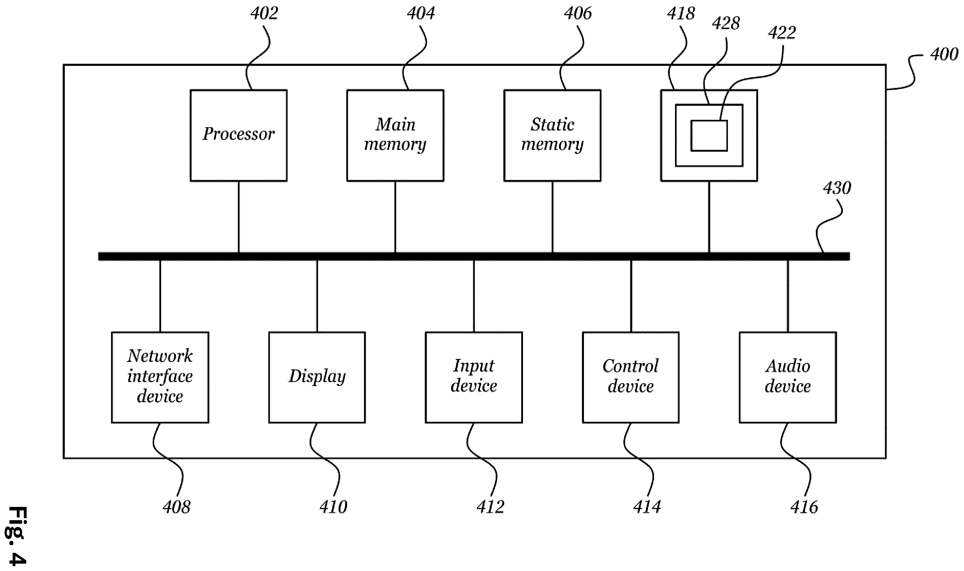

There is provided apparatus arranged to perform any one or more of the methods described herein. With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. The computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

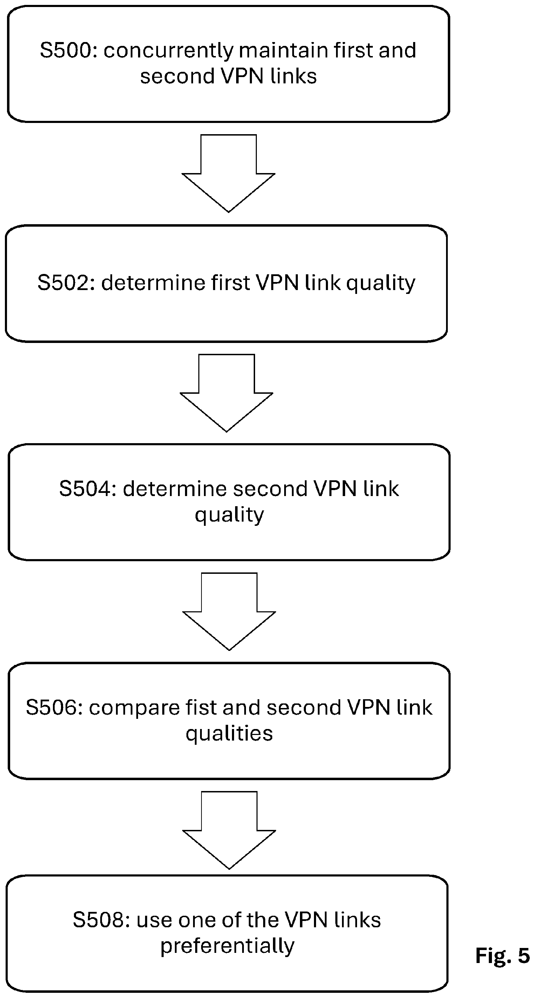

Figure 5 shows a first method performed in accordance with the disclosure. At step S500 first and second VPN communications links are maintained between a VPN client and a VPN server. Subsequent to step S500 and optionally: at step S502, a first VPN communications link quality measurement is determined based on communication using the first VPN communications link; at step S504, a second VPN communications link quality measurement is determined based on communication using the second VPN communications link; at step S506, the first and second VPN communications link quality measurements are compared to determine a preferential VPN communications link of the first and second VPN communication links; and at step S508 and consequent to step S504 and/or step S506, the preferential VPN communications link is used to preferentially communicate between the VPN client and the VPN server.

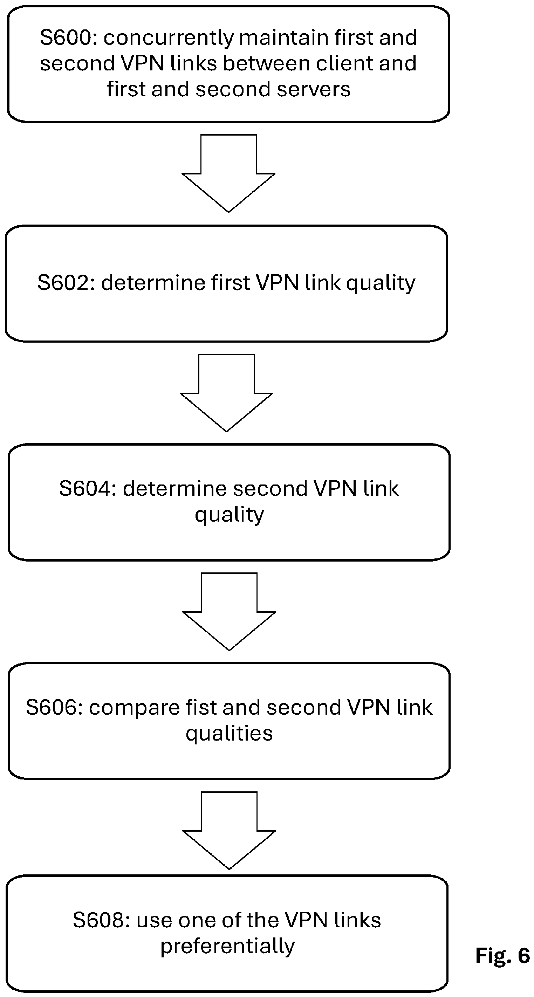

Figure 6 shows a second method performed in accordance with the disclosure. At step S600 first and second VPN communications links are maintained between a VPN client and respective fist and second VPN servers. Optionally, one of the first and second VPN servers is arranged to mirror the other of the first and second VPN servers. Subsequent to step S600 and optionally: at step S602, a first VPN communications link quality measurement is determined based on communication using the first VPN communications link; at step S604, a second VPN communications link quality measurement is determined based on communication using the second VPN communications link; at step S606, the first and second VPN communications link quality measurements are compared to determine a preferential VPN communications link of the first and second VPN communication links; and at step S608 and consequent to step S604 and/or step S606, the preferential VPN communications link is used to preferentially communicate between the VPN client and one of the first and second VPN servers.

It is to be understood that any of the approaches/examples set out herein may be employed in combination with any of the other approaches/examples set out herein - provided that they are not mutually exclusive.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A telecommunications method comprising concurrently maintaining different first and second Virtual Private Network, VPN, communications links between a VPN client and a VPN server.

2. The method of claim 1 further comprising:
determining a first VPN communications link quality measurement based on communication using the first VPN communications link;
determining a second VPN communications link quality measurement based on communication using the second VPN communications link;
comparing the first and second VPN communications link quality measurements to determine a preferential VPN communications link of the first and second VPN communication links; and
consequently using the preferential VPN communications link to preferentially communicate between the VPN client and the VPN server.

3. The method of claim 2, further comprising subsequently:
determining a third VPN communications link quality measurement based on communication using the first VPN communications link;
determining a fourth VPN communications link quality measurement based on communication using the second VPN communications link;
comparing the third and fourth VPN communications link quality measurements to determine a second preferential VPN communications link of the first and second VPN communication links; and
consequently using the second preferential VPN communications link to preferentially communicate between the VPN client and the VPN server.

4. The method of claim 1, further comprising:
concurrently maintaining a third VPN communications link between the VPN client and a second VPN server;
determining a first VPN communications link quality measurement based on communication using the first VPN communications link;
determining a second VPN communications link quality measurement based on communication using the second VPN communications link;
determining a third VPN communications link quality measurement based on communication using the third VPN communications link;
comparing the first, second, and third VPN communications link quality measurements to determine a preferential VPN communications link of the first, second, and third VPN communication links; and
consequently using the preferential VPN communications link to preferentially communicate between the VPN client and the preferred VPN communications link's respective VPN server.

5. The method of any of claims 2 to 4, wherein link quality measurement is determined passively based on one or more communications communicated within the respective VPN communications link and having a purpose other than to enable link quality determination,
optionally wherein the link quality measurements are measures of one or more of: round trip time, jitter, retransmissions, bytes transmitted.

6. The method of any preceding claim, wherein one or more of:
A) the first VPN communications link is arranged for communication using one of IPv4 and IPv6 and the second VPN communications link is arranged for communication using the other one of IPv4 and IPv6;
B) the first VPN communications link is arranged for communication using one of User Datagram Protocol, UDP and Transmission Control Protocol, TCP, and the second VPN communications link is arranged for communication using the other one of UDP and TCP.

7. The method of any preceding claim wherein one or both of:
A) the method is performed by a pluggable engine;
B) the method is performed at one of the VPN client and the VPN server.

8. Apparatus arranged to concurrently maintain different first and second Virtual Private Network, VPN, communications links between a VPN client and a VPN server.

9. A telecommunications method comprising concurrently maintaining:
a first Virtual Private Network, VPN, communications link between a VPN client and a first VPN server; and
a second VPN communications link between the VPN client and a second VPN server,
wherein one of the first and second VPN servers is arranged to mirror the other of the first and second VPN servers.

10. The method of claim 9, further comprising:
determining a first VPN communications link quality measurement based on communication using the first VPN communications link;
determining a second VPN communications link quality measurement based on communication using the second VPN communications link;
comparing the first and second VPN communications link quality measurements to determine a preferential VPN communications link of the first and second VPN communication links; and
consequently using the preferential VPN communications link to preferentially communicate between the VPN client and the respective VPN server.

11. The method of claim 10, further comprising subsequently:
determining a third VPN communications link quality measurement based on communication using the first VPN communications link;
determining a fourth VPN communications link quality measurement based on communication using the second VPN communications link;
comparing the third and fourth VPN communications link quality measurements to determine a second preferential VPN communications link of the first and second VPN communication links; and
consequently using the second preferential VPN communications link to preferentially communicate between the VPN client and the respective VPN server.

12. The method of claim 9, further comprising:
concurrently maintaining a third VPN communications link between the VPN client and the first VPN server, wherein the third VPN communications link is different to the first VPN communications link;
determining a first VPN communications link quality measurement based on communication using the first VPN communications link;
determining a second VPN communications link quality measurement based on communication using the second VPN communications link;
determining a third VPN communications link quality measurement based on communication using the third VPN communications link;
comparing the first, second, and third VPN communications link quality measurements to determine a preferential VPN communications link of the first, second, and third VPN communication links; and
consequently using the preferential VPN communications link to preferentially communicate between the VPN client and the preferred VPN communications link's respective VPN server.

13. The method of any of claims 9 to 12, wherein link quality measurement is determined passively based on one or more communications communicated within the respective link and having a purpose other than to enable link quality determination,
optionally wherein the link quality measurements are measures of one or more of: round trip time, jitter, retransmissions, bytes transmitted.

14. The method of claim 9, further comprising, based on a first expected performance of the first VPN communications link and a second expected performance of the second VPN communications link, preferentially communicating via one of the first and second VPN communications links,
optionally wherein the first and second expected performances are based on a type of data to be preferentially communicated via the one of the first and second VPN communications links.

15. Apparatus arranged to concurrently maintain:
a first Virtual Private Network, VPN, communications link between a VPN client and a first VPN server; and
a second VPN communications link between the VPN client and a second VPN server,
wherein one of the first and second VPN servers is arranged to mirror the other of the first and second VPN servers.

16. A computer readable medium carrying instructions which, when executed by one or more processors cause the method of any of claims 1 to 7 and/or 9 to 14 to be carried out.
